# EUROPÄISCHE PATENTSCHRIFT

(11) **EP 2 666 350 B1**
(45) Veröffentlichungstag und Bekanntmachung des Hinweises auf die Patenterteilung: **28.03.2018**
(21) Anmeldenummer: 13000971.5
(22) Anmeldetag: 26.02.2013
(51) Int. Cl.: A01D 34/66

(54) **MÄHWERK**
MOWER
MÉCANISME DE TONTE

(30) Priorität: 25.05.2012 DE 202012005207 U
(43) Veröffentlichungstag der Anmeldung: 27.11.2013
(73) Patentinhaber: PÖTTINGER Landtechnik GmbH, 4710 Grieskirchen (AT)
(72) Erfinder: Ackermann, Stephan, 4710 Grieskirchen (AT); Angleitner, Norbert, 4682 Geboltskirchen (AT); Greifeneder, August, 4707 Schlüßlberg (AT)
(74) Vertreter: Zinnecker, Armin

(56) Entgegenhaltungen:
- EP-A1- 1 364 569
- WO-A1-95/01715
- DE-A1- 3 628 605
- DE-A1- 4 427 719
- DE-T2- 60 005 247
- GB-A- 1 567 939

## Beschreibung

Die vorliegende Erfindung betrifft ein Großmähwerk zum Anbau an einen Schlepper, mit einem Anbaubock, der an den Schlepper anbaubar ist, sowie zwei in Arbeitsstellung seitlich vom Anbaubock über die Schlepperbreite hinaus zu gegenüberliegenden Seiten auskragenden Mähwerkseinheiten, die jeweils an einem Tragarm, der am Anbaubock gelagert ist, aufgehängt sind, wobei die Tragarme zum Verschwenken der Mähwerkseinheiten in eine Transportstellung jeweils schwenkbar am Anbaubock gelagert sind.

Bei Mähwerkskombinationen, die an Schlepper anbaubar sind, werden üblicherweise am Bug des Schleppers ein Frontmähwerk und am Heck des Schleppers zwei Heckmähwerke angebaut, wobei letztere seitlich über die Schlepperbreite rechts und links auskragen, so dass sich die bearbeiteten Mähgassen der beiden Heckmähwerke mit dem Frontmähwerk ergänzen. Um für den Straßentransport die zulässige Transportbreite einzuhalten, können die seitlichen Heckmähwerke üblicherweise in eine Transportstellung verbracht werden, in der sie seitlich nicht mehr über die Fahrspur des Schleppers auskragen. Üblicherweise können die an Tragarmen aufgehängten Mähwerkseinheiten durch Hochklappen der Tragarme um liegende, in Fahrtrichtung weisende Schwenkachsen noch oben geschwenkt werden, so dass die Mähwerkzeuge, welche in der Arbeitsstellung nach unten zum Boden hin weisen, in der Transportstellung seitlich rechts und links nach außen weisen.

Bei sehr großen Mähwerkseinheiten mit Arbeitsbreiten von jeweils 3,5m oder mehr bzw. einer Gesamtarbeitsbreite der Mähwerkskombination von 10m oder mehr können die seitlich auskragenden Mähwerke jedoch nicht mehr einfach um liegende, in Fahrtrichtung weisende Schwenkachsen nach oben in die genannte Transportstellung geklappt werden, da hierdurch die zulässige Gesamthöhe des Maschinengespanns für den Straßenverkehr überschritten werden würde.

Um die maximale Höhe in der Transportstellung zu verringern, wurde bereits angedacht, die Mähwerke über den oberen Todpunkt hinaus, d.h. über die vertikale Stellung hinaus ein Stück weit zur gegenüberliegenden Seite zu schwenken, wodurch die Höhe der aufgestellten Mähwerkseinheit wieder abnimmt, während die Breite immer noch im akzeptablen Rahmen verbleibt. Diese Maßnahme hilft indes bei sehr großen Mähwerkseinheiten nicht mehr bzw. ist diese Maßnahme dann nicht mehr durchführbar, wenn zwei Mähwerkseinheiten rechts und links quer zur Fahrtrichtung einander gegenüberliegend vorgesehen sind, da dann die Mähwerkseinheiten in der nach oben geschwenkten Transportstellung nicht weit über den genannten Todpunkt hinaus zur gegenüberliegenden Seite hingeschwenkt werden können, da die Mähwerkseinheiten dort einander im Weg stehen und aneinander anstehen.

Insofern werden die heckseitig angeordneten Mähwerkseinheiten bei Großmähwerken bislang üblicherweise als Aufsattelgeräte ausgebildet, d.h. ein Transportfahrwerk wird mittels einer Deichsel am Schlepper angelenkt, welches in der Arbeitsstellung mittig hinter den beiden seitlich auskragenden Mähwerkseinheiten herläuft und relativ zum Schlepper um eine aufrechte Achse scharnieren kann, so dass das genannte Transportfahrwerk nach Art eines Anhängers hinter dem Schlepper herläuft. Für den Straßentransport können die Mähwerkseinheiten nach hinten über das Transportfahrwerk geschwenkt und dort abgelegt werden, so dass die Mähwerkskombination die maximal zulässige Straßentransportbreite einhält. Eine solche Mähwerkskombination mit aufgesatteltem Transportfahrwerk zeigt beispielsweise die Schrift EP 1 616 474.

Mit den bei bisherigen Mähwerkskombinationen großer Breite verwendeten Transportfahrwerken ergeben sich jedoch unerwünschte Nachteile. Einerseits überfährt das Transportfahrwerk im Mähbetrieb das vom Frontmähwerk bereits geschnittene Erntegut, welches sich - da die Räder des Transportfahrwerks nicht die Größe bzw. den Durchmesser der Schlepperräder besitzen - bisweilen am Transportfahrwerk verfängt.

Zum anderen führt ein solches Transportfahrwerk im Straßentransport zu einem Kurvenschneiden, was bei entsprechend breiten - und damit in der nach hinten geschwenkten Transportstellung langen - Mähwerkseinheiten zum Teil beträchtlich sein kann. Ferner kommt es aufgrund des hohen Gewichts der großen Mähwerkseinheiten im Bereich des Transportfahrwerks oft zu hohen Bodenanpressdrücken, da die Räder des Transportfahrwerks deutlich kleiner als die Schlepperreifen sind und damit den Druck nicht vergleichbar auf den Boden verteilen können, wodurch gerade beim Ein- und Ausfahren in/von Feldern mit feuchtem Boden nicht unerhebliche Fahrspuren in den Boden gedrückt werden.

Weitere Mähwerke, deren Mähbalken zum Zwecke des Transports in eine Fahrtrichtungsparallele, nebeneinanderliegende Stellung verbracht werden können, zeigen die Schriften DE 44 27 719 A1 und EP 13 64 596 A1, wobei bei der erstgenannten DE 44 27 719 der Maschinenrahmen um aufrechte Knickachsen scharnieren kann, während bei der EP 13 64 596 nach hinten schwenkbare Tragarme vorgesehen sind, an denen die Mähwerkseinheiten aufgehängt sind. Aus der DE 600 05 247 T2 ist ferner ein Einzelmähwerk bekannt, das an einem auskragenden Tragarm aufgehängt ist, welcher Tragarm um eine aufrechte Achse nach hinten geschwenkt werden kann und durch einen Druckmittelzylinder gewichtsentlastet ist.

Der vorliegenden Erfindung liegt hiervon ausgehend die Aufgabe zugrunde, ein verbessertes Großmähwerk der eingangs genannten Art zu schaffen, welches Nachteile des Standes der Technik vermeidet und letzteren in vorteilhafter Weise weiterbildet. Insbesondere sollen auch sehr große seitliche Mähwerkseinheiten in einfacher Weise in eine die maximal zulässigen Breiten- und Höhenmaße für den Straßentransport einhaltende Transportstellung verbringbar sein, ohne dies mit Handlingsnachteilen wie Kurvenschneiden, Eindruckspuren in weichen Böden und fehlerhafter Überlappung mit der Schnittgasse des Frontmähwerks zu erkaufen.

Erfindungsgemäß wird die genannte Aufgabe durch ein Großmähwerk gemäß Anspruch 1 gelöst. Bevorzugte Ausgestaltungen der Erfindung sind Gegenstand der abhängigen Ansprüche.

Es wird also vorgeschlagen, auf ein Transportfahrwerk zu verzichten und die beiden in der Arbeitsstellung seitlich auskragenden Mähwerkseinheiten in einer liegenden Ebene in eine freischwebende, nur vom Schlepper bzw. dem damit verbundenen Anbaubock getragene Transportstellung zu verbringen, in der die Mähwerkseinheiten - je nach Fahrtrichtung - hinter oder vor dem Anbaubock liegend nebeneinander angeordnet sind. Erfindungsgemäß sind die Tragarme, an denen die Mähwerkseinheiten ausgehängt sind, jeweils um eine aufrechte Schwenkachse schwenkbar am Anbaubock gelagert und in einer liegenden Schwenkebene in eine Transportstellung verschwenkbar, in der die Tragarme und die daran aufgehängten Mähwerkseinheiten nebeneinander liegend hinter/vor dem Anbaubock positioniert sind, wobei die Mähwerkseinheiten in der genannten Transportstellung mit ihren Mähwerkzeugen nach unten zum Boden weisend freischwebend über dem Boden gehalten und über die Tragarme und den Anbaubock alleine durch den Schlepper am Boden angestützt sind. Im Gegensatz zu einem Aufsattelgerät kann auf ein Transportfahrwerk verzichtet werden, der am Schlepper befestigte Anbaubock trägt die genannten Mähwerkseinheiten auch in der Transportstellung alleine und frei von einem Transportfahrwerk. Die Mähwerkseinheiten werden in der Transportstellung in der Spur des Schleppers gehalten und verschwenken gegenüber dem Anbaubock bzw. gegenüber dem Schlepper nicht, so dass ein Kurvenschneiden nicht eintritt. Zudem kann das Gewicht auch in der Transportstellung über die breiten, großen Schlepperräder abgetragen und verteilt in den Boden eingeleitet werden, wodurch die Grasnarbe geschont und ein Eindrücken von Fahrspuren vermieden wird. Zudem wird durch die liegende Transportstellung der Schwerpunkt niedrig gehalten, so dass auch bei schnellen Kurvenfahrten keine Kippmomente um die Fahrtrichtungsachse auf den Schlepper wirken.

In Weiterbildung der Erfindung können die genannten Tragarme um separate, voneinander quer zur Fahrtrichtung beabstandete Schwenkachsen schwenkbar am Anbaubock gelagert sein, so dass jeder Tragarm seine eigene aufrechte Schwenkachse am Anbaubock besitzt. Grundsätzlich wäre es auch möglich, die beiden Tragarme um eine gemeinsame aufrechte, zentrale Schwenkachse am Anbaubock schwenkbar zu lagern, durch zwei separate Schwenkachsen können jedoch günstigere Geometrieverhältnisse in der Transportstellung, kürzere Tragarme und damit bessere Hebelverhältnisse in der Arbeitsstellung und eine bessere Kraftverteilung und -einleitung in den Anbaubock erzielt werden. Vorteilhafterweise sind die beiden genannten aufrechten Schwenkachsen der Tragarme hierbei quer zur Fahrtrichtung soweit voneinander beabstandet, dass sich die Tragarme dann, wenn die Mähwerkseinheiten in der Transportstellung unmittelbar nebeneinander liegen bzw. aneinander anstehen, etwa parallel zueinander erstrecken, wobei die genannten Tragarme in der Draufsicht betrachtet einen geraden Verlauf besitzen können.

Die Verschwenkbarkeit der Mähwerkseinheiten in die Transportstellung kann vorteilhafterweise grundsätzlich händisch erfolgen, da aufgrund der aufrechten Schwenkachsen der Tragarme bzw. der liegenden Schwenkebene keine großen Kräfte für den Verschwenkvorgang aufzubringen sind. In vorteilhafter Weiterbildung der Erfindung kann jedoch ein Schwenkantrieb zum fremdenergiebetätigten Verschwenken der Mähwerkseinheiten zwischen Transportstellung und Arbeitsstellung vorgesehen sein, wobei der genannte Schwenkantrieb aufgrund der Schwenkbewegung im Wesentlichen nur in einer liegenden Ebene und den damit einhergehenden geringen Schwenkkräften klein dimensioniert ausgebildet sein kann. In vorteilhafter Weiterbildung der Erfindung kann ein Stellzylinderantrieb als Schwenkantrieb vorgesehen sein, welcher Schwenkantrieb einerseits am Anbaubock und andererseits an den Tragarmen angreift, wobei im Falle eines Stellzylinderantriebs der jeweilige Stellzylinder jeweils gelenkig einerseits am Anbaubock und andererseits am Tragarm angelenkt ist.

Die Mähwerkseinheiten können in Weiterbildung der Erfindung Arbeitsbreiten von 3,50m oder mehr besitzen, so dass in Verbindung mit einer dritten, zentral angeordneten Mähwerkseinheit, welche an einer gegenüberliegenden Seite des Schleppers anbaubar sein kann, eine Gesamtarbeitsbreite des Mähwerks von mehr als 10m realisiert werden kann.

Die genannten aufrechten Schwenkachsen, mit denen die Tragarme am Anbaubock gelagert sind, können grundsätzlich die einzigen Schwenkachsen bzw. den einzigen Freiheitsgrad der Tragarme relativ zum Anbaubock bilden. In Weiterbildung der Erfindung aber können die Tragarme zusätzlich auch um liegende Wippachsen relativ zum Anbaubock auf und ab scharnieren, insbesondere um die Mähwerkseinheiten aus der Arbeitsstellung ein Stück weit in eine Vorgewendestellung ausheben zu können, wobei die Wippbarkeit der Tragarme hierzu beschränkt sein kann, beispielsweise weniger als 45° oder auch weniger als 30° betragen kann. Alternativ oder zusätzlich kann die genannte Wippachse der Tragarme auch noch vorgesehen sein, um eine bessere Bodenanpassung und/oder eine Gewichtsentlastung der Mähwerkseinheiten im Arbeitsbetrieb zu realisieren. Hierzu können den genannten Wippachsen der Tragarme Hubaktoren und/oder federnd wirkende Entlastungsaktoren zugeordnet sein, welche einerseits an den Tragarmen und andererseits am Anbaubock oder einem damit verbundenen Zwischenstück angreifen können. Als reine Entlastungsaktoren können beispielsweise Federn vorgesehen sein, sei es in Form mechanischer oder druckfluidisch ausgebildeter Federn. Um auch eine Hubfunktion beispielsweise zum Ausheben in das Vorgewende realisieren, können auch durch Druckmittel betätigte Zylindereinheiten vorgesehen werden.

Mit Hilfe der genannten Wippachsen und zugehöriger Stellaktoren können die Tragarme und die daran aufgehängten Mähwerkseinheiten auch in deren Transportstellung ein Stück weit nach oben gewippt werden, um die Bodenfreiheit in der Transportstellung bzw. im Straßentransport zu verbessern.

Um die durch die freischwebende Aufhängung der Mähwerke in der Transportstellung hohen Biegemomente im Anbaubock besser abfangen zu können, weist der Anbaubock gemäß der Erfindung einen geschlossenen Torsionskasten auf bzw. ist er in Form eines quaderförmigen, geschlossenen Torsionskastens ausgebildet, der sich aufrecht stehend quer zur Fahrtrichtung erstreckt und an seinen seitlichen Enden die Schwenkachsen für die Tragarme trägt. An seinem unteren und oberen Ende weist der Torsionskasten Anlenkmittel zum Anbau an den Schlepper mittels einer Lenkeranlenkung, insbesondere einer Dreipunktanlenkung mit Ober- und Unterlenkern auf. Der Anbaubock ist hierbei derart konturiert , dass die Höhenerstreckung der seitlichen Randabschnitte des Anbaubocks, die die Schwenkachsen für die Tragarme aufweisen größer als die Höhenerstreckung eines Mittelabschnitts des Anbaubocks ist, an dem der Oberlenker angelenkt ist. Hierdurch können die Schwenkachsen für die Tragarme relativ lang ausgebildet bzw. die Schwenkachsen bildenden Lagerstellen weit voneinander beabstandet werden, wodurch eine günstige Einleitung der entstehenden Hebel- und Torsionsmomente erreicht werden kann.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Draufsicht auf einer an einen Schlepper anbaubaren Mähwerkskombination mit einem Frontmähwerk und zwei seitlich auskragenden Heckmähwerkseinheiten,
- Fig. 2:: eine perspektivische Rückansicht der zwei in der Arbeitsstellung seitlich auskragenden Mähwerkseinheiten, die jeweils mittels eines Tragarms an einem Anbaubock aufgehängt sind, der an dem Schlepper durch eine Dreipunktanlenkung mit Ober- und Unterlenkern angebaut ist, und
- Fig. 3:: eine perspektivische, heckseitige Ansicht der beiden Mähwerkseinheiten aus Fig. 2, wobei die Mähwerkseinheiten jedoch in ihrer nach hinten zusammengeschränkten Transportstellung gezeigt sind.

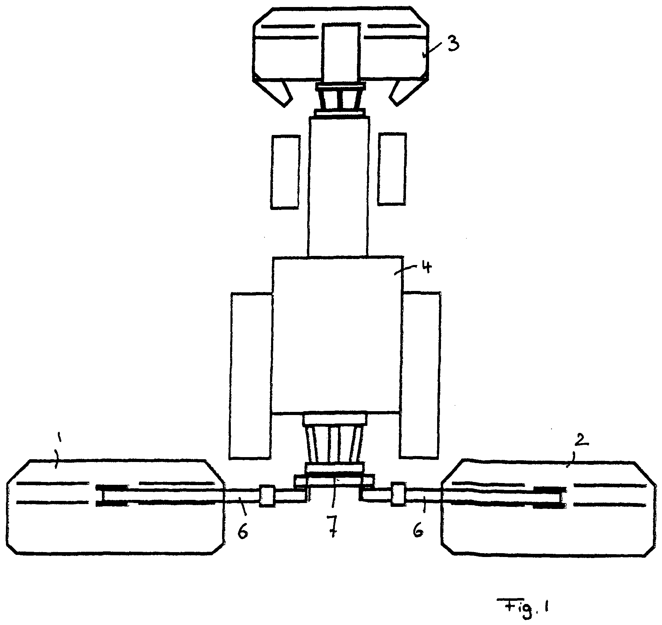

Wie Fig. 1 schematisch zeigt, kann das Mähwerk neben zwei seitlich auskragenden Mähwerkseinheiten 1 und 2 eine dritte Mähwerkseinheit 3 umfassen, welche mittig in der Fahrspur des Schleppers 4 angeordnet ist und seitlich rechts und links von den beiden vorgenannten seitlich auskragenden Mähwerkseinheiten 2 ergänzt wird, so dass sich die Mähgassen der drei Mähwerkseinheiten ergänzen. Vorteilhafterweise sind die beiden seitlich auskragenden Mähwerkseinheiten 1 und 2 heckseitig am Schlepper 4 anbaubar, während die mittig angeordnete dritte Mähwerkseinheit 3 frontseitig angebaut wird. Grundsätzlich sind jedoch auch andere Anordnungen denkbar, beispielsweise eine umgekehrte Anordnung mit seitlich auskragenden Mähwerken vorne und einem heckseitigen, mittigen Mähwerk oder in anderer Anordnung. Die in Fig. 1 gezeigte heckseitige Anordnung der seitlich auskragenden Mähwerke mit einem zentralen Frontmähwerk ist jedoch vorteilhaft hinsichtlich des Nicht-Überfahrens erst noch zu mähenden Ernteguts und hinsichtlich der Transportstellung der Mähwerke.

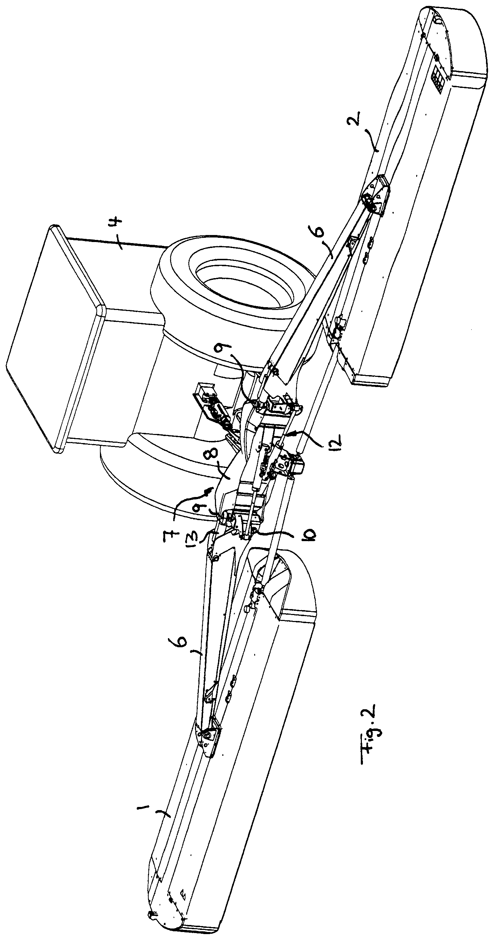

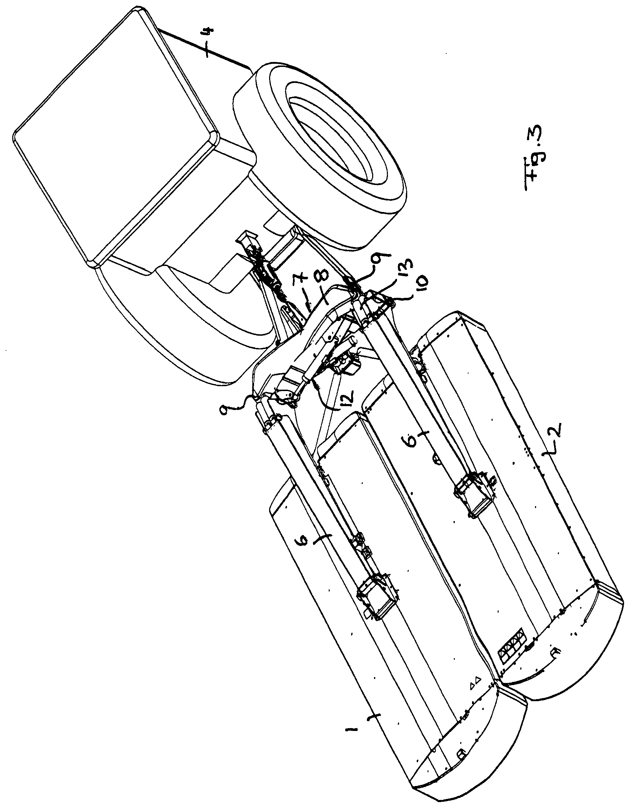

Wie die Fig. 2 und 3 zeigen, sind die beiden in ihrer Arbeitsstellung seitlich über den Schlepper 4 hinaus auskragenden Mähwerkseinheiten 1 und 2 jeweils pendelnd um eine liegende, in Fahrtrichtung weisende Achse an einem Tragarm 6 aufgehängt, der in der in Fig. 2 gezeigten Arbeitsstellung liegend quer zur Fahrtrichtung von einem Anbaubock 7 auskragt und die jeweilige Mähwerkseinheit 1 bzw. 2 trägt.

Die genannten Mähwerkseinheiten 1 und 2 und auch die mögliche dritte Mähwerkseinheit 3 können selbst grundsätzlich verschieden ausgebildet sein, beispielsweise in Form von Trommel- oder Scheibenmähwerken, bei denen um aufrechte Antriebsachsen umlaufende Messer vorgesehen sein können, wobei üblicherweise jede Mähwerkseinheit mehrere solcher Messertrommeln bzw. Messerscheiben in Fahrtrichtung nebeneinander angeordnet aufweisen kann.

Der genannte Anbaubock 7 kann in vorteilhafter Weiterbildung der Erfindung durch eine Mehrpunktanlenkung, insbesondere eine Dreipunktanlenkung mit Ober- und Unterlenkern an den Schlepper 4 angebaut werden, so dass der Anbaubock 7 im Betrieb starr, jedoch höhenverstellbar am Schlepper 4 befestigt ist. Der genannte Anbaubock 7 kann hierbei grundsätzlich verschieden ausgebildet sein, beispielsweise in Form einer Rohr- oder Rahmenkonstruktion. Wie die Fig. 2 und 3 zeigen, kann der Anbaubock 7 auch einen geschlossenen Torsionskasten 8 in Form einer Stahlblechkonstruktion aufweisen, welche quaderförmig konturiert und stehend quer zur Fahrtrichtung ausgerichtet ist.

An den äußeren Randseiten des Anbaubocks 7 sind die Tragarme 6 am Anbaubock 7 angelenkt, und zwar um aufrechte Schwenkachsen 9 schwenkbar sowie um liegende Wippachsen 10 wippbar. Wie die Fig. 2 und 3 zeigen, können die Schwenk- und Wippachsen 9 und 10 in ein Zwischen- bzw. Anlenkstück 11 integriert sein, mittels dessen die Tragarme 6 jeweils am Anbaubock 7 angelenkt sind. Genauer gesagt kann jeder Tragarm 6 an einem solchen Anlenkstück 11 um die genannte liegende Wippachse 10 wippbar befestigt sein, während wiederum das genannte Anlenkstück 11 um die jeweilige aufrechte Schwenkachse 9 am Anbaubock 7 schwenkbar befestigt ist.

Durch die genannten aufrechten Schwenkachsen 9 können die Tragarme 6 und damit die daran aufgehängten Mähwerkseinheiten 1 und 2 in einer liegenden Schwenkebene um jeweils etwa 80°-100°, insbesondere etwa 90° zwischen Arbeitsstellung und Transportstellung verschwenkt werden. Wie ein Vergleich der Fig. 2 und 3 zeigt, können die Mähwerkseinheiten 1 und 2 aus ihren seitlich auskragenden, sich quer zur Fahrtrichtung erstreckenden Arbeitsstellungen durch Verschwenken um die genannten aufrechten Schwenkachsen 9 rechtwinklig nach hinten in ihre Transportstellung zurückgeklappt werden, so dass sich die genannten Tragarme 6 und die daran aufgehängten Mähwerkseinheiten 1 und 2 in der Transportstellung näherungsweise parallel zueinander erstrecken und hinter dem Anbaubock 7 liegend positioniert sind. Die Anordnung der Schwenkachsen 9 und die Ausbildung der Tragarme 6 sind hierbei vorteilhafterweise derart beschaffen, dass die Mähwerkseinheiten 1 und 2 in der in Fig. 3 gezeigten Transportstellung unmittelbar nebeneinander liegen bzw. mit ihren - in der Arbeitsstellung rückseitigen - Längsseiten aneinander anstehen bzw. nur durch einen schmalen Spalt voneinander beabstandet sind.

Die genannten aufrechten Schwenkachsen 9 können vorteilhafterweise vertikal ausgerichtet sein, gegebenenfalls aber auch leicht gegenüber der Vertikalen geneigt sein, wobei vorteilhafterweise der genannte Neigungswinkel gegenüber der Vertikalen 10° nicht übersteigt und vorteilhafterweise < 5° ist.

Um die Mähwerkseinheiten 1 und 2 zwischen den Arbeits- und Transportstellungen hin und her schwenken zu können, ist ein Schwenkantrieb 12 vorgesehen, der von den genannten aufrechten Schwenkachsen 9 beabstandet einerseits an den Tragarmen 6 und andererseits am Anbaubock 7 angreift. Wie die Fig. 2 und 3 zeigen, kann der genannte Schwenkantrieb 12 in Form eines Stellzylinderantriebs ausgebildet sein, bei dem jeweils ein Stellzylinder einerseits gelenkig am Anbaubock und andererseits am Tragarm 6 angelenkt ist. In vorteilhafter Weiterbildung der Erfindung kann der Schwenkantrieb 12 auf einer in Fahrtrichtung rückwärtigen Seite des Anbaubocks 7 angeordnet sein.

Die Wippbewegung der Tragarme 6 um die vorgenannten liegenden Wippachsen 10 wird durch Hub- und/oder Entlastungsaktoren 13 gesteuert, die einerseits an den Tragarmen 6 und andererseits am vorgenannten Zwischen- bzw. Anlenkstück 11 und/oder den Schwenkachsen 9 angreifen und/oder koaxial zu den Schwenkachsen 9 am Anbaubock 7 schwenkbar angelenkt sind. Die genannten Hub- und/oder Entlastungsaktoren 13 können beispielsweise in Form von Zylindereinheiten ausgebildet sein, welche einerseits gelenkig an einem jeweiligen Tragarm 6 und andererseits gelenkig an der Schwenkachse 9 angreifen bzw. daran schwenkbar gelagert sind bzw. um diese schwenkbar am Anbaubock 7 gelagert sind. Mittels der genannten Hub- und/oder Entlastungsaktoren 13 können die Tragarme 6 und damit die daran gelagerten Mähwerkseinheiten 1 und 2 einerseits gewichtsentlastet werden, so dass die Mähwerkseinheiten 1 und 2 besser der Bodenkontur folgen können. Andererseits können die genannten Hub- und/oder Entlastungsaktoren 13 auch dazu genutzt werden, die Tragarme im Vorgewende ein Stück weit nach oben zu wippen und/oder die Tragarme 6 in der in Fig. 3 gezeigten Transportstellung ebenfalls ein Stück weit nach oben zu wippen, um die Bodenfreiheit zu erhöhen.

## Patentansprüche

1. Großmähwerk zum Anbau an einen Schlepper (4), mit einem Anbaubock (7), der Anlenkpunkte zur Anlenkung am Schlepper (4) mittels Ober- und Unterlenker aufweist, sowie zwei in Arbeitsstellung seitlich vom Anbaubock (7) über die Schlepperbreite hinaus auskragenden Mähwerkseinheiten (1, 2), die jeweils an einem Tragarm (6), der am Anbaubock (7) gelagert ist, aufgehängt sind, wobei die Tragarme (6) zum Verschwenken der Mähwerkseinheiten (1, 2) in eine Transportstellung am Anbaubock (7) jeweils schwenkbar gelagert sind, wobei die Tragarme (6) jeweils um eine aufrechte Schwenkachse (9) schwenkbar am Anbaubock (7) gelagert und in einer liegenden Schwenkebene in eine Transportstellung, in der die Tragarme (6) und die daran aufgehängten Mähwerkseinheiten (1, 2) nebeneinander liegend hinter/vor dem Anbaubock positioniert sind, verschwenkbar sind, wobei die Mähwerkseinheiten (1, 2) in der genannten Transportstellung mit ihren Mähwerkzeugen nach unten zum Boden weisend freischwebend über dem Boden gehalten und über die Tragarme (6) sowie dem Anbaubock (7) alleine durch den Schlepper (4) am Boden abgestützt sind, **dadurch gekennzeichnet, dass** der Anbaubock (7) einen sich quer zur Fahrtrichtung erstreckenden, geschlossenen, etwa quaderförmigen Torsionskasten (8) umfasst, an dessen seitlichen Enden die Tragarme (6) angelenkt sind, wobei der genannte Torsionskasten (8) an seinen seitlichen Endabschnitten eine Höhenerstreckung besitzt, die größer als die Höhenerstreckung eines mittleren Abschnitts des Anbaubocks (7) ist.

2. Großmähwerk nach dem vorhergehenden Anspruch, wobei die genannten Tragarme (6) um separate aufrechte Schwenkachsen (9) schwenkbar am Anbaubock (7) gelagert sind, wobei die genannten Schwenkachsen (9) quer zur Fahrtrichtung voneinander beabstandet sind, insbesondere derart weit voneinander beabstandet, dass sich die Tragarme (6), dann wenn die Mähwerkseinheiten (1, 2) in der Transportstellung unmittelbar nebeneinander liegen oder aneinander anstegen, etwa parallel zueinander erstrecken.

3. Großmähwerk nach einem der vorhergehenden Ansprüche, wobei die Mähwerkseinheiten (1, 2) jeweils eine Arbeitsbreite von mehr als 3,5m und ihrer Arbeitsstellung zusammen eine Spurbreite von mehr als 10m besitzen.

4. Großmähwerk nach einem der vorhergehenden Ansprüche, wobei die Tragarme (6) jeweils an einem Anlenkstück (11) um eine liegende Wippachse (10) wippbar gelagert sind, welches Anlenkstück (11) um die genannte aufrechte Schwenkachse (9) schwenkbar am Anbaubock (7) gelagert ist, wobei den genannten Wippachsen (10) jeweils ein Hub- und/oder Entlastungsaktor (13) zum Anheben der Mähwerkseinheiten (1, 2) in eine Vorgewendestellung und/oder zur Gewichtsentlastung der Mähwerkseinheiten (1, 2) zugeordnet ist.

5. Großmähwerk nach dem vorhergehenden Anspruch, wobei die Hub- und/oder Entlastungsaktoren (13) von einer Steuereinrichtung ansteuerbar sind derart, dass die Tragarme (6) beim Verbringen in die Transportstellung zur Erhöhung der Bodenfreiheit automatisch angehoben werden.

6. Großmähwerk nach einem der vorhergehenden Ansprüche, wobei ein Schwenkantrieb (12), vorzugsweise in Form eines Stellzylinderantriebs, zum Verschwenken der Tragarme (8) in der liegenden Schwenkebene zwischen Arbeits- und Transportstellung und zurück vorgesehen ist, welcher Schwenkantrieb (12) einerseits an den Tragarmen und andererseits am Anlenkbock (7) angreift.

## Claims

1. A large mower for attachment to a tractor (4) comprising an installation block (7) that has articulated connection points for the articulated connection to the tractor (4) by means of upper and lower linkages and comprising two mower units (1, 2) that project laterally from the installation block (7) beyond the tractor width in the working position and that are each suspended at a support arm (6) that is supported at the installation block (7), wherein the support arms (6) are each pivotably supported at the installation block (7) for pivoting the mower units (1, 2) into a transport position; wherein the support arms (6) are each supported at the installation block (7) pivotably about an upright pivot axis (9) and are pivotable in a horizontal pivot plane into a transport position in which the support arms (6) and the mower units (1, 2) suspended thereon are positioned lying next to one another behind/in front of the installation block; and wherein the mower units (1. 2) are held floating freely above the ground in said transport position with their mowers facing downwardly toward the ground and are supported at the ground solely by the tractor (4) via the support arms (6) and the installation block (7), **characterized in that** the installation block (7) comprises a closed torsion box (8) which extends transversely to the direction of travel, which is approximately of parallelepiped shape and at whose lateral ends the support arms (6) are connected in an articulated manner, with said torsion box (8) having a vertical extent at its lateral end sections that is greater than the vertical extent of a central section of the installation block (7).

2. A large mower in accordance with the preceding claim, wherein said support arms (6) are supported at the installation block (7) pivotable about separate upright pivot axes (9), with said pivot axes (9) being spaced apart from one another transversely to the direction of travel and are in particular spaced so far apart from one another that the support arms (6) extend approximately in parallel with one another when the mower units (1, 2) are disposed directly next to one another or adjoin one another in the transport position.

3. A large mower in accordance with one of the preceding claims, wherein the mower units (1, 2) each have a working width of more than 3.5 m and their working positions together have a track width of more than 10 m.

4. A large mower in accordance with one of the preceding claims, wherein the support arms (6) are each luffably supported at an articulated connection piece (11) about a horizontal luffing axis (10), said articulated connection piece (11) being supported at the installation block (7) pivotably about said upright pivot axis (9), with a respective lifting actuator and/or relief actuator (13) being associated with said luffing axes (10) to raise the mower units into a headland position and/or for the weight relief of the mower units (1, 2).

5. A large mower in accordance with the preceding claim, wherein the lifting and/or relief actuators (13) are controllable by a control device such that the support arms (6) are automatically raised on the bringing into the transport position to increase the ground clearance.

6. A large mower in accordance with one of the preceding claims, wherein a pivot drive (12), preferably in the form of a setting cylinder, is provided for pivoting the support arms (8) in the horizontal pivot plane between the working position and the transport position and back, said pivot drive (12) engaging at the support arms on the one hand and at the articulated connection block (7) on the other hand.

## Revendications

1. Grand mécanisme de tonte destiné à être attelé à un tracteur (4), comprenant un support d'attelage (7), qui comporte des points d'attache pour l'attache au tracteur (4) au moyen de bras supérieurs et inférieurs, ainsi que deux unités de mécanisme de tonte (1, 2) qui, en position de travail, sont en porte-à-faux sur les côtés du support d'attelage (7) au-delà de la largeur du tracteur et qui sont suspendues respectivement à un bras porteur (6), qui est monté sur le support d'attelage (7),
les bras porteurs (6) étant respectivement montés pivotants sur le support d'attelage (7) pour le pivotement des unités de mécanisme de tonte (1, 2) dans une position de transport,
les bras porteurs (6) étant montés respectivement sur le support d'attelage (7) pivotants sur un axe de pivotement (9) vertical et étant pivotants dans un plan de pivotement horizontal pour venir dans une position de transport, dans laquelle les bras porteurs (6) et les unités de mécanisme de tonte (1, 2) suspendues à ceux-ci sont positionnés les uns à côté des autres derrière/devant le support d'attelage, les unités de mécanisme de tonte (1, 2) étant, dans ladite position de transport, maintenues flottantes au-dessus du sol avec leurs outils de tonte tournés vers le bas vers le sol et supportées sur le sol uniquement par le tracteur (4) par le biais des bras porteurs (6) ainsi que du support d'attelage (7), **caractérisé en ce que** le support d'attelage (7) comprend un caisson de torsion (8) fermé, approximativement en forme de parallélépipède s'étendant transversalement au sens de la marche, sur les extrémités latérales duquel les bras porteurs (6) sont articulés, ledit caisson de torsion (8) possédant au niveau de ses portions d'extrémité latérales une extension en hauteur qui est supérieure à l'extension en hauteur d'une portion centrale du support d'attelage (7).

2. Grand mécanisme de tonte selon la revendication précédente, dans lequel lesdits bras porteurs (6) sont montés sur le support d'attelage (7) pivotants sur des axes de pivotement (9) verticaux séparés, lesdits axes de pivotement (9) étant espacés entre eux transversalement au sens de la marche, en particulier espacés entre eux à une telle distance que les bras porteurs (6) s'étendent approximativement de manière parallèle l'un à l'autre quand les unités de mécanisme de tonte (1, 2) sont directement l'une à côté de l'autre ou affleurent l'une à l'autre dans la position de transport.

3. Grand mécanisme de tonte selon l'une des revendications précédentes, dans lequel
les unités de mécanisme de tonte (1, 2) possèdent respectivement une largeur de travail supérieure à 3,5 m et au total une largeur de trace supérieure à 10 m dans leur position de travail.

4. Grand mécanisme de tonte selon l'une des revendications précédentes, dans lequel
les bras porteurs (6) sont montés respectivement sur une pièce d'articulation (11) basculants sur un axe de basculement (10) horizontal, ladite pièce d'articulation (11) étant montée sur le support d'attelage (7) pivotante sur ledit axe de pivotement (9) vertical, un actionneur de levage et/ou de décharge (13) destiné au levage des unités de mécanisme de tonte (1, 2) dans une position de tournière et/ou à la décharge du poids des unités de mécanisme de tonte (1, 2) étant respectivement associé auxdits axes de basculement (10).

5. Grand mécanisme de tonte selon la revendication précédente, dans lequel les actionneurs de levage et/ou de décharge (13) peuvent être commandés par un dispositif de commande de telle manière que les bras porteurs (6) sont automatiquement levés pour augmenter la garde au sol lors du passage en position de transport.

6. Grand mécanisme de tonte selon l'une des revendications précédentes, dans lequel
un entraînement de pivotement (12), de préférence sous la forme d'un entraînement par cylindre de commande, est prévu pour le pivotement des bras porteurs (8) dans le plan de pivotement horizontal entre la position de travail et la position de transport et inversement, ledit entraînement de pivotement (12) saisissant d'une part les bras porteurs et d'autre part le support d'attelage (7).
